# EUROPEAN PATENT SPECIFICATION

(11) **EP 3 312 229 B1**
(45) Date of publication and mention of the grant of the patent: **17.07.2019**
(21) Application number: 16813877.4
(22) Date of filing: 04.03.2016
(51) Int. Cl.: C08L 9/00, B32B 25/04, C08K 3/04, C08K 3/26, C08K 3/36, C08L 7/00, C08L 9/06, B65G 15/34

(54) **RUBBER COMPOSITION, LAMINATE, AND CONVEYOR BELT**
GUMMIZUSAMMENSETZUNG, LAMINAT UND FÖRDERBAND
COMPOSITION DE CAOUTCHOUC, STRATIFIÉ, ET COURROIE TRANSPORTEUSE

(30) Priority: 22.06.2015 JP 2015125053
(43) Date of publication of application: 25.04.2018
(73) Proprietor: Bridgestone Corporation, Tokyo 104-8340 (JP)
(72) Inventor: TAKANO, Genho, Tokyo 104-8340 (JP); AKAMA, Syuyou, Tokyo 104-8340 (JP)
(74) Representative: Oxley, Robin John George
(86) International application number: PCT/JP2016/001197
(87) International publication number: WO 2016/208100

(56) References cited:
- WO-A1-2006/080486
- WO-A1-2015/163168
- JP-A- H1 087 896
- JP-A- H09 150 606
- JP-A- 2002 363 346
- JP-A- 2003 128 841
- JP-A- 2005 126 642
- JP-A- 2008 303 326
- JP-A- 2009 040 815
- JP-A- 2014 152 002
- US-A1- 2010 190 018
- US-B1- 6 180 703

## Description

### TECHNICAL FIELD

This disclosure relates to a rubber composition, a laminate and a conveyor belt.

### BACKGROUND

For the purpose of reinforcing a rubber member to improve strength thereof, reinforcing members, including organic fibers such as polyethylene terephthalate and nylon, which is untreated or dipped with an adhesive component such as resorcin-formaldehyde-latex (RFL), etc. on its surface, and/or inorganic fibers such as steel cord, and the like, are used for rubber products required to have strength, such as tires for automobiles, conveyor belts, and hoses.

In manufacture of such rubber product, such reinforcing members and rubber members and/or such reinforcing members themselves are occasionally adhered to each other with an adhesive containing a rubber composition. For example, conveyor belts are frequently used as item transportation means in various industrial fields, and thus are required to have high durability capable of withstanding friction and impact with transported items. Therefore, they are manufactured by preparing one or more layers of reinforcing member, and cover rubbers as rubber members, laminating them via an adhesive containing a rubber composition such that the cover rubbers become upper and lower outermost layers, and then performing vulcanization molding. In such situation, in order to obtain high reinforcing effect, desired is a rubber composition capable of exhibiting high adhesiveness between the reinforcing members and high adhesiveness between the rubber members and the reinforcing members.

For example, in use of a conveyor belt, there are cases that after manufacture of one layered belt including a layer containing a rubber composition and a reinforcing member layer, a processing (the so-called endless processing) is performed to peel a part of the layers in both ends thereof, and to adhere the ends with an endless adhesive and/or an endless adhesive rubber, etc. The adhered both end portions (endless portion) are required to have high durability in actual use, and it is particularly important that the members in the endless portion, particularly the reinforcing members, are firmly adhered.

Here, from the viewpoint of the adhesiveness between rubber members using a rubber composition and reinforcing members, for example, JPH06-306211A (PTL1) discloses that a rubber manufacturable from a rubber composition containing 0.5 parts to 10 parts by mass of N,N' -m-phenylene bismaleimide, 0.3 parts to 3 parts by mass of a carboxylic acid which is divalent or more or an anhydride thereof, and 0.3 to 10 parts by mass of a compound generating formaldehyde when heated per 100 parts by mass of a rubber such as natural rubber and styrene butadiene rubber has excellent vulcanization molding performance with reinforcing members.

### CITATION LIST

### Patent Literature

PTL1: JPH06-306211A

### SUMMARY

### (Technical Problem)

However, as a result of study, we discovered that there is a problem that even if the aforementioned conventional rubber composition is adhered to reinforcing members, its adhesiveness is deteriorated because of environmental degradation of the reinforcing members due to transportation process, storage process, manufacture process, etc. In particular, we discovered as well that in the case of manufacturing a layered belt by laminating a plurality of layers containing the aforementioned conventional rubber composition and one or more of the reinforcing member layers, when its endless portion is peeled, its peel strength becomes insufficient, and an amount of the rubber composition remaining on the reinforcing members is small. Therefore, there is a risk that the reinforcing members are not adhered to each other firmly enough, and are incapable of bringing high durability to the conveyor belt, which leaves room for improving such rubber composition.

On the other hand, when performing an operation peeling a layer containing a rubber composition and a reinforcing member layer from each other, such as the aforementioned endless processing, easiness to peel at some degree is important, and the aforementioned conventional rubber composition is required to have high peel operability as well.

Then, this disclosure aims to provide a rubber composition having excellent adhesiveness with reinforcing members, particularly reinforcing members in environmental degradation, and capable of bringing high peel operability therewith. Moreover, this disclosure aims to provide a laminate using the aforementioned rubber composition and capable of improving durability of a rubber product, and a conveyor belt using the aforementioned laminate and having high durability.

### (Solution to Problem)

As a result of intensive study in order to achieve the aforementioned purpose, we discovered that by compounding a specific compound at a specific amount to a rubber component containing a diene based rubber, it is possible to obtain a rubber composition having excellent adhesiveness with reinforcing members, particularly reinforcing members in environmental degradation, and capable of bringing high peel operability therewith.

The rubber composition of this disclosure is a rubber composition obtainable by compounding a rubber component containing a diene based rubber, a wet silica, a carbon black and a calcium carbonate, wherein:
the compounding amount of the wet silica is 3 parts by mass or more per 100 parts by mass of the diene based rubber;
the compounding amount of the calcium carbonate is 10 parts by mass or more and 120 parts by mass or less per 100 parts by mass of the diene based rubber;
the diene based rubber comprises a natural rubber and a styrene-butadiene rubber; and
the average primary particle size of the calcium carbonate is 0.8 µm or more and 13 µm or less. Such rubber composition has excellent adhesiveness with reinforcing members, particularly reinforcing members in environmental degradation, and is capable of bringing high peel operability therewith.

In the rubber composition of this disclosure, the average primary particle size of the calcium carbonate is 0.8 µm or more and 13 µm or less. Thereby, it is possible to suppress increase of viscosity of unvulcanized rubber composition, to thereby bring stable film thickness stability, and to suppress deterioration of a modulus and a tear strength of vulcanized rubber composition, to thereby obtain stable reinforcing effect.

In the rubber composition of this disclosure, it is preferable that the compounding amount of the wet silica is 4 parts by mass or more and 9 parts by mass or less per 100 parts by mass of the diene based rubber. By setting the compounding amount of the wet silica within this range, it is possible to sufficiently improve the adhesiveness with reinforcing members, particularly reinforcing members degraded due to exposure to atmosphere, and to suppress increase of viscosity of unvulcanized rubber composition, to thereby suppress reduction of productivity of rubber products using such rubber composition.

In the rubber composition of this disclosure, the rubber component contains a natural rubber and a styrene-butadiene rubber. Thereby, it is possible to obtain a rubber composition with improved adhesiveness with reinforcing members.

In the rubber composition of this disclosure, it is preferable that the ratio of the compounding amount of the natural rubber to the total compounding amount of the natural rubber and the styrene-butadiene rubber is 20 mass% or more and 60 mass% or less. Thereby, it is possible to improve mechanical strength, wear resistance, film thickness stability, aging resistance and flex cracking resistance of a rubber member or rubber product using the obtained rubber composition.

In the rubber composition of this disclosure, the nitrogen adsorption BET specific surface area of the wet silica is preferably 80 m²/g or more, more preferably more than 200 m²/g. By setting the nitrogen adsorption BET specific surface area of the wet silica within this range, it is possible to raise polarity of the rubber composition, and to thereby further improve the adhesiveness of the rubber composition and the reinforcing members.

In the rubber composition of this disclosure, it is preferable that the nitrogen adsorption BET specific surface area of the carbon black is 8 m²/g or more and 100 m²/g or less. By setting the nitrogen adsorption BET specific surface area of the carbon black within this range, it is possible to improve the peel strength of the rubber composition and the reinforcing members, particularly reinforcing members in environmental degradation, and on the other hand, it is possible to sufficiently suppress deterioration of the peel operability, and to simultaneously obtain sufficient productivity such as scattering resistance and rollability during manufacture.

It is preferable that the rubber composition of this disclosure is used to be arranged between a rubber member and a reinforcing member, or between reinforcing members, to adhere the same. Thereby, it is possible to firmly adhere the rubber and the reinforcing member, and/or the reinforcing members.

Note that the "rubber member" in this disclosure refers to any member containing at least a rubber component used in manufacture of a rubber product.

The laminate of this disclosure is obtainable by stacking and adhering a layer containing the rubber composition of this disclosure and a reinforcing member layer. Such laminate has the layer containing the rubber composition and the reinforcing member layer firmly adhered to each other, and is capable of improving durability of a rubber product.

The conveyor belt of this disclosure contains the laminate of this disclosure. Such conveyor belt has a layer containing the rubber composition and a reinforcing member layer firmly adhered to each other, and thus has high durability.

### (Advantageous Effect)

According to this disclosure, it is possible to provide a rubber composition having excellent adhesiveness with reinforcing members, particularly reinforcing members in environmental degradation, and capable of bringing high peel operability therewith. Moreover, according to this disclosure, it is possible to provide a laminate using the aforementioned rubber composition and capable of improving durability of a rubber product, and a conveyor belt using the aforementioned laminate and having high durability.

### BRIEF DESCRIPTION OF THE DRAWINGS

FIG. 1 schematically illustrates a peeled surface in a peel test of a layer containing the rubber composition of this disclosure and a reinforcing member layer;
FIG. 2 schematically illustrates a peeled surface in a peel test of a layer containing a rubber composition of a comparative example and a reinforcing member layer; and
FIG. 3 schematically illustrates a peeled surface in a peel test of a layer containing a rubber composition of another comparative example and a reinforcing member layer.

### DETAILED DESCRIPTION

### <Rubber composition>

The following describes one of the disclosed embodiments in detail.

The rubber composition of this disclosure is obtainable by compounding at least a rubber component containing a diene based rubber, a wet silica, a carbon black and a calcium carbonate, and further compounding other components if necessary.

### (Rubber component)

The rubber composition of this disclosure necessarily uses natural rubber (NR) and styrene-butadiene rubber (SBR) as diene based rubber, as a rubber component. The diene based rubber is capable of exhibiting performances such as high elasticity and high heat resistance via vulcanization. The diene based rubber is not specifically limited and may be appropriately selected depending on the purpose. The natural rubber (NR) and styrene-butadiene rubber (SBR) may be used in combination with one or more other diene based rubbers. Examples include diene based synthetic rubbers such as butadiene rubber (BR), isoprene rubber (IR), chloroprene rubber (CR), ethylene-propylene-diene rubber (EPDM), acrylonitrile-butadiene rubber (NBR) and butyl rubber (IIR).

In particular, from the viewpoint of improving the adhesiveness with reinforcing members, the rubber composition of this disclosure contains a natural rubber and a styrene-butadiene rubber.

The ratio of the diene based rubber in the rubber component of the rubber composition of this disclosure is not specifically limited and may be appropriately selected depending on the purpose, but is preferably 80 mass% or more, more preferably 90 mass% or more, particularly preferably 100 mass%. By setting the ratio of the diene based rubber in the rubber component to 80 mass% or more, the adhesiveness of the obtained rubber composition and reinforcing members is improved, and it is possible to improve durability of a rubber product using a laminate of a layer containing the rubber composition and a reinforcing member layer.

Note that the ratio of the compounding amount of the natural rubber to the total compounding amount of the natural rubber and the styrene-butadiene rubber is preferably 20 mass% or more, and preferably 60 mass% or less. By setting the ratio of the compounding amount of the natural rubber to 20 mass% or more, it is possible to improve the mechanical strength of a rubber member or rubber product using the obtained rubber composition, and on the other hand, by setting the same to 60 mass% or less, it is possible to improve the wear resistance and the film thickness stability of a rubber member or rubber product using the obtained rubber composition. From the same viewpoint, the ratio of the compounding amount of the natural rubber to the total compounding amount of the natural rubber and the styrene-butadiene rubber is more preferably 30 mass% or more, and more preferably 50 mass% or less.

Moreover, the ratio of the compounding amount of the styrene-butadiene rubber to the total compounding amount of the natural rubber and the styrene-butadiene rubber is preferably 40 mass% or more, and preferably 80 mass% or less. By setting the ratio of the compounding amount of the styrene-butadiene rubber to 40 mass% or more, it is possible to improve the aging resistance of a rubber member or rubber product using the obtained rubber composition, and on the other hand, by setting the same to 80 mass% or less, it is possible to improve the flex cracking resistance of a rubber member or rubber product using the obtained rubber composition. From the same viewpoint, the ratio of the compounding amount of the styrene-butadiene rubber to the total compounding amount of the natural rubber and the styrene-butadiene rubber is more preferably 50 mass% or more, and more preferably 70 mass% or less.

Note that other than the diene based rubber, the rubber composition of this disclosure may also contain a non-diene based rubber (a rubber component other than diene based rubber) as the rubber component, and may use a non-diene based rubber ordinarily used in rubber products without being specifically limited.

Moreover, in the rubber composition of this disclosure, a reclaimed rubber containing a diene based rubber and optionally a non-diene based rubber may be used. In the case of using a reclaimed rubber in the rubber composition of this disclosure, regarding its compounding amount, from the viewpoint of sufficiently ensuring quality of a rubber product using the obtained rubber composition, it is preferable that a polymer component in the reclaimed rubber is 20 mass% or less with respect to a total amount of compounded polymers.

### (Wet silica)

The rubber composition of this disclosure necessarily uses a wet silica. The wet silica may be obtained by, for example, using sodium silicate as a raw material, neutralizing its water solution to precipitate silica, filtering, and drying. The wet silica is classified into precipitated silica and gel process silica, both of which may be used. By using the wet silica in the rubber composition, it is possible to improve the adhesiveness of such rubber composition and reinforcing members such as organic fibers, particularly reinforcing members in environmental degradation. The reason has not been clarified, but it is considered that the unique high polarity of wet silica contributes to improvement of the adhesiveness. The wet silica may be used singly or in a combination of two or more.

The nitrogen adsorption BET specific surface area (N₂SA) of the wet silica used in the rubber composition of this disclosure is not specifically limited and may be appropriately selected depending on the purpose, but is preferably 80 m²/g or more. By setting the nitrogen adsorption BET specific surface area of the wet silica to 80 m²/g or more, the polarity of the rubber composition is raised, and it is possible to further improve the adhesiveness of the rubber composition and reinforcing members, and to suppress deterioration of the peel operability when peeling a layer containing this rubber composition and a reinforcing member layer in environmental degradation. From the same viewpoint, the nitrogen adsorption BET specific surface area of the wet silica is more preferably 120m²/g or more, further more preferably more than 200 m²/g.

Note that the nitrogen adsorption BET specific surface area of the wet silica may be measured according to ISO5794-1.

The average primary particle size of the wet silica used in the rubber composition of this disclosure is not specifically limited and may be appropriately selected depending on the purpose, but is preferably 10 nm or more. By setting the average primary particle size of the wet silica to 10 nm or more, it is possible to suppress reduction of the productivity due to scattering, etc. during kneading.

Note that the average primary particle size of the wet silica may be determined via calculation by using, for example, transmission electron microscope electron microscope image and/or BET specific surface area. Examples of the method for calculating the BET specific surface area include conventionally well-known methods, such as "Nanomaterial Information Provision Sheet: Amorphous Colloidal Silica (as of March, 2011) Reference 6." published by METI.

The compounding amount of the wet silica in the rubber composition of this disclosure is not specifically limited as long as it is 3 parts by mass or more per 100 parts by mass of the diene based rubber, but is preferably 4 parts by mass or more, and preferably less than 10 parts by mass. If the compounding amount of the wet silica in the rubber composition is less than 3 parts by mass per 100 parts by mass of the diene based rubber, there is a risk that the improvement effect of the adhesiveness to reinforcing members due to the compounded wet silica, particularly reinforcing members degraded due to exposure to atmosphere, is insufficient. On the other hand, by setting the compounding amount of the wet silica in the rubber composition to 4 parts by mass or more per 100 parts by mass of the diene based rubber, it is possible to obtain a rubber composition with sufficiently high adhesiveness to reinforcing members, particularly reinforcing members degraded due to exposure to atmosphere. Moreover, by setting the compounding amount of the wet silica in the rubber composition to less than 10 parts by mass per 100 parts by mass of the diene based rubber, it is possible to suppress rise of the viscosity of unvulcanized rubber composition, and to suppress reduction of the productivity of a rubber product using such rubber composition. From the same viewpoint, the compounding amount of the wet silica in the rubber composition is more preferably 4 parts by mass or more, further more preferably 5 parts by mass or more, particularly preferably 7 parts by mass or more, and more preferably 9 parts by mass or less.

### (Carbon black)

The rubber composition of this disclosure necessarily uses a carbon black. The carbon black, as a reinforcing filler, has a function of improving the modulus and the wear resistance of the rubber composition, and appropriately improving the adhesiveness of this rubber composition and reinforcing members, particularly reinforcing members in environmental degradation. The carbon black may be used singly or in a combination of two or more.

The nitrogen adsorption BET specific surface area (N₂SA) of the carbon black used in the rubber composition of this disclosure is not specifically limited and may be appropriately selected depending on the purpose, but is preferably 8 m²/g or more, and preferably 100 m²/g or less. By setting the nitrogen adsorption BET specific surface area of the carbon black to 8 m²/g or more, it is possible to ensure the peel strength between the rubber composition and reinforcing members, particularly reinforcing member in environmental degradation, and to ensure sufficient reinforcement performance. Moreover, by setting the nitrogen adsorption BET specific surface area of the carbon black to 100 m²/g or less, it is possible to sufficiently suppress deterioration of the peel operability when peeling a layer containing this rubber composition and a reinforcing member layer, obtain sufficient productivity such as scattering resistance and reliability during manufacture, and simultaneously ensure high dispersibility in the rubber composition during kneading. From the same viewpoint, the nitrogen adsorption BET specific surface area of the carbon black is more preferably 25 m²/g or more, and more preferably 90 m²/g or less.

Note that the nitrogen adsorption BET specific surface area of the carbon black may be measured with, for example, a conventionally well-known method.

The compounding amount of the carbon black in the rubber composition of this disclosure is not specifically limited and may be appropriately selected depending on the purpose, but is preferably 10 parts by mass or more and preferably 100 parts by mass or less per 100 parts by mass of the diene based rubber. By setting the compounding amount of the carbon black in the rubber composition to 10 parts by mass or more per 100 parts by mass of the diene based rubber, it is possible to suppress deterioration of the peel strength between this rubber composition and reinforcing members, particularly reinforcing members in environmental degradation. Moreover, by setting the compounding amount of the carbon black in the rubber composition to 100 parts by mass or less per 100 parts by mass of the diene based rubber, it is possible to improve the operability when peeling a layer containing this rubber composition and a reinforcing member layer, for example, during endless processing of the conveyor belt. From the same viewpoint, the compounding amount of the carbon black in the rubber composition is more preferably 30 parts by mass or more, and more preferably 50 parts by mass or less per 100 parts by mass of the diene based rubber.

In the rubber composition of this disclosure, a total compounding amount of the aforementioned wet silica and carbon black is preferably 30 parts by mass or more, and preferably 80 parts by mass or less per 100 parts by mass of the diene based rubber. By setting the total compounding amount of the wet silica and the carbon black to 30 parts by mass or more per 100 parts by mass of the diene based rubber, it is possible to obtain a rubber composition with excellent peel strength with reinforcing members, particularly reinforcing members degraded due to exposure to atmosphere, and sufficiently high adhesiveness with the reinforcing member. Moreover, by setting the total compounding amount of the wet silica and the carbon black to 80 parts by mass or less per 100 parts by mass of the diene based rubber, it is possible to suppress rise of the viscosity of unvulcanized rubber composition to thereby suppress reduction of the productivity of a rubber product using such rubber composition, and to suppress deterioration of the operability when peeling a layer containing this rubber composition and a reinforcing member layer, for example, during endless processing of the conveyor belt. From the same viewpoint, the total compounding amount of the wet silica and the carbon black in the rubber composition is more preferably 40 parts by mass or more, and more preferably 55 parts by mass or less per 100 parts by mass of the diene based rubber.

### (Calcium carbonate)

The rubber composition of this disclosure necessarily uses a calcium carbonate. The calcium carbonate has a function reducing breaking resistance of the rubber composition to thereby improve the adhesiveness of the rubber composition with reinforcing members such as organic fibers and other rubber members, and has a function improving the peel operability of the rubber composition and the reinforcing member. The calcium carbonate may be used singly or in a combination of two or more.

The average primary particle size of the calcium carbonate used in the rubber composition of this disclosure is 0.8 µm or more and 13 µm or less. By setting the average primary particle size of the calcium carbonate to 0.5 µm or more, it is possible to sufficiently improve the adhesiveness between the rubber composition and reinforcing members, particularly reinforcing members in environmental degradation.

By setting the average primary particle size of the calcium carbonate to 0.8 µm or more, it is possible to suppress rise of the viscosity of unvulcanized rubber composition, and to bring stable film thickness stability. Moreover, by setting the same to 13 µm or less, it is possible to suppress deterioration of the modulus and the tear strength of vulcanized rubber composition, and to obtain stable reinforcing effect. From the same viewpoint, the average primary particle size of the calcium carbonate is more preferably 1.0 µm or more, further more preferably 2.0 µm or more, and more preferably 12.0 µm or less.

Note that the average primary particle size of the calcium carbonate may be measured by, for example, observing with a scanning electron microscope.

Note that the calcium carbonate used in the rubber composition of this disclosure aims to bring excellent dispersity in the rubber composition, and thus a calcium carbonate subjected to surface treatment by using an organic material if necessary.

The compounding amount of the calcium carbonate in the rubber composition of this disclosure is necessarily 10 parts by mass or more and 120 parts by mass or less per 100 parts by mass of the diene based rubber. If the compounding amount of the calcium carbonate in the rubber composition is less than 10 parts by mass per 100 parts by mass of the diene based rubber, there is a risk of cost increase of the rubber composition, a risk of deterioration of the operability due to close contact with a bumbary, a roll, etc. caused by excessively low viscosity of unvulcanized rubber composition, and a risk of deterioration of the operability when peeling the rubber composition and the reinforcing member due to excessively high cohesion tearing force of the rubber composition. Moreover, if the compounding amount of the calcium carbonate in the rubber composition is more than 120 parts by mass per 100 parts by mass of the diene based rubber, there is a risk of excessive decrease of a cohesion tearing force of the rubber composition and insufficient peel strength between the rubber composition and reinforcing members, a risk of floating of unvulcanized rubber composition from a roll during rolling which uses a roll and deterioration of the productivity due to insufficient shearing heat, and a risk of insufficient dispersity in the rubber composition during kneading using a Banbury mixer, a Brabender mixer, a kneader, etc. From the same viewpoint, the compounding amount of the calcium carbonate in the rubber composition is preferably 20 parts by mass or more, and preferably 100 parts by mass or less.

### (Other components)

In the rubber composition of this disclosure, other than the aforementioned rubber component, wet silica, carbon black and calcium carbonate, compounding ingredients ordinarily used in the rubber industry, for example, a vulcanizing agent such as sulfur, a vulcanization accelerator, a vulcanization accelerator aid such as zinc oxide, a softener, an age resistor, an antiscorching agent, a processing aid, a lubricant, a silica other than the aforementioned wet silica such as dry silica, a filler other than carbon black and calcium carbonate, a filler modifier, a tackifier, a colorant, etc. may be used appropriately depending on the purpose.

Note that in the case of using sulfur as a vulcanizing agent to the rubber composition of this disclosure, from the viewpoint of effectively vulcanization at a minimum necessary amount, its compounding amount is preferably 1.5 parts by mass or more and 3 parts by mass or less per 100 parts by mass of the diene based rubber.

### (Preparation of rubber composition)

The rubber composition of this disclosure may be prepared by, for example, kneading the aforementioned components by using a Banbury mixer, a Brabender mixer, a kneader, etc.

A rubber composition prepared in this way has the following features. Namely, in the case of adhering such rubber composition and reinforcing members, particularly reinforcing members in environmental degradation, and then peeling the same, it is possible to obtain high peel strength. Moreover, in the case of adhering such rubber composition and reinforcing members, particularly reinforcing members in environmental degradation, and then peeling the same, the amount of the rubber composition remaining on the reinforcing members is more. Further, due to these features, the rubber composition of this disclosure can be said as having excellent adhesiveness to reinforcing members such as organic fibers, particularly reinforcing members in environmental degradation, and may be preferably used in manufacture of rubber products such as tires for automobiles, conveyor belts, and hoses. Specifically, when manufacturing a rubber product, it is possible to arrange this rubber composition between reinforcing members, or between rubber members and reinforcing members, to firmly adhere these members. In other words, the rubber composition of this disclosure may be used as an adhesive rubber composition. This rubber composition may be used, for example, to a conveyor belt in a layered shape, by laminating with reinforcing member layers. Furthermore, during endless processing of such conveyor belt, after peeling reinforcing members or rubber members and reinforcing members adhered by the aforementioned rubber composition, and then re-adhering these by using a rubber for endless adhesion, it is possible to perform firm adhesion.

### <Laminate>

The laminate of this disclosure is obtainable by stacking and adhering at least a layer containing the rubber composition of this disclosure (hereinafter also referred to as "the present rubber composition layer") and a reinforcing member layer. In other words, the laminate of this disclosure is obtainable by stacking and adhering the present rubber composition layer and the reinforcing member layer. Note that the laminate of this disclosure is inclusive of a laminate obtainable by alternately stacking and adhering a plurality of the present rubber composition layers and one or a plurality of the reinforcing member layers, and is also inclusive of a laminate obtainable by laminating and adhering the present rubber composition layer on both sides of a reinforcing member layer, and further laminating two or more of a product obtained thereby. Moreover, in addition to a layer containing the rubber composition of this disclosure, the laminate of this disclosure may also include a rubber layer other than a layer containing the rubber composition of this disclosure.

### (The present rubber composition layer)

The present rubber composition layer may be one obtainable by shaping the aforementioned rubber composition of this disclosure into a sheet-like shape by using an apparatus such as a rolling roll and an extruder.

The thickness of the present rubber composition layer is not specifically limited and may be appropriately selected depending on the purpose, but from the viewpoint of suppression of rubber breakage during molding, and thinning, is preferably 0.2 mm or more and 2 mm or less. Note that in the case of using a plurality of the present rubber composition layers, thickness of each present rubber composition layer may be either identical or different.

### (Reinforcing member layer)

The reinforcing member layer has a function improving the reinforcement performance of rubber products such as tires for automobiles, conveyor belts, and hoses. Here, the reinforcing member layer is not particularly limited and may be appropriately selected depending on the purpose. Note that the reinforcing member layer as an adhesion target of the present rubber composition layer is particularly preferably a layer including an organic fiber (hereinafter also referred to as "organic fiber layer"), more preferably a canvas layer formed of an organic fiber. Note that the "canvas" in the present Specification refers to a textile obtained by weaving fibers.

The material of the organic fiber is not specifically limited and may be appropriately selected depending on the purpose. Examples include fibers formed of aliphatic polyamides such as nylon; aromatic polyamides such as Kevlar; polyesters such as polyethylene terephthalate, polyethylene naphthalate, polyethylene succinate and polymethyl methacrylate; syndiotactic-1,2-polybutadiene; acrylonitrile-butadiene-styrene copolymer; polystyrene; and copolymers thereof. These may be used singly or in a combination of two or more. For example, in the case of using a canvas formed of an organic fiber as the reinforcing member layer, warp and woof yarns of the canvas may be formed of different materials.

Note that the reinforcing member layer may be an untreated organic fiber layer, but from the viewpoint of improving of the adhesiveness of the present rubber composition layer and the reinforcing member layer, is preferably one including on at least a part of its surface, for example, its entire surface, a film containing resorcinol, formaldehyde, a condensate of resorcinol and formaldehyde, and a latex (hereinafter also referred to as "RFL film").

The RFL film may be obtained by, for example, before stacking with the present rubber composition layer, immersing at least a part of the organic fiber, for example, the entire organic fiber, in a liquid containing resorcinol, formaldehyde, a partial condensate of resorcinol and formaldehyde, and a latex (hereinafter also referred to as "RFL dispersion"), and subjecting the same to heat treatment. Moreover, the partial condensate of resorcinol and formaldehyde may be obtained via resolification reaction. From the viewpoint of improving the adhesiveness of the present rubber composition layer and the reinforcing member layer, examples of the latex contained in the RFL dispersion include vinyl pyridine latex, styrene-butadiene copolymer latex (SBR latex), natural rubber latex, acrylate copolymer based latex, butyl rubber latex, nitrile rubber latex, and chloroprene latex. These may be used singly or in a combination of two or more.

Moreover, when preparing the RFL dispersion, reaction catalysts such as acids and alkalis may be used together if necessary.

Note that a mass ratio of the resorcinol, the formaldehyde, the partial condensate of resorcinol and formaldehyde, and the latex in the RFL dispersion is not specifically limited.

Specifically, the RFL film may be obtained by immersing a part or an entire organic fiber such as a canvas in the aforementioned RFL dispersion, removing extra attached liquid by passing the same between rolls or performing vacuum suction if necessary, and then performing one-phase or multiphase heat treatment.

Here, in order to accelerate the reaction and to reduce heat shrinkage in actual use, a final treatment temperature in the heat treatment is preferably 180°C or higher, particularly preferably 200°C or higher.

### (Rubber layer other than present rubber composition layer)

Moreover, the laminate of this disclosure may include a rubber layer other than the present rubber composition layer on at least one outermost layer depending on the requirement of the desired rubber product. For example, in the case of using the laminate of this disclosure to a conveyor belt, the laminate may include on an outermost layer a rubber layer capable of functioning as a cover rubber. Here, the rubber layer capable of functioning as a cover rubber is not specifically limited. Examples include ones obtained by appropriately kneading: a polymer component containing a natural rubber (NR), a butadiene rubber (BR), a styrene-butadiene rubber (SBR), an isoprene rubber (IR), a chloroprene rubber (CR), an ethylene-propylene-dine rubber (EPDM), an acrylonitrile-butadiene rubber (NBR), a butyl rubber (IIR), etc., or a mixture thereof; and a vulcanizing agent such as sulfur, a vulcanization accelerator, a vulcanization accelerator aid such as zinc oxide, a softener, an age resistor, an antiscorching agent, a processing aid, a lubricant, a carbon black, a silica, calcium carbonate a filler modifier, a tackifier, a colorant, etc. depending on the purpose. Note that examples of the cover rubber include an upper cover rubber and a lower cover rubber, which may be rubber members of either the same type or different types.

Moreover, in the case where the laminate of this disclosure includes on an outermost layer a rubber layer other than the present rubber composition layer, it is preferable that such rubber layer is adjacent on its inner side to the present rubber composition layer.

### (Preparation of laminate)

The method for stacking the present rubber composition layer, the reinforcing member layer, and optionally the rubber layer other than the present rubber composition is not specifically limited, and an ordinary method may be used for stacking.

Here, in the case of stacking with a conventionally known calendering process by using the present rubber composition layer and the reinforcing member layer, it is possible to first manufacture a laminate A including rubber composition layer-reinforcing member layer-rubber composition layer, and directly use this laminate A, or alternatively, use a laminate B obtained by overlapping two or more laminates A depending on necessary properties of the rubber product such as conveyor belt (namely, in the case of using two overlapped laminates A, obtained is a laminate B including [rubber composition layer-reinforcing member layer-rubber composition layer-rubber composition layer-reinforcing member layer-rubber composition layer]). Furthermore, for example, in manufacture of the conveyor belt, by stacking the aforementioned rubber layer capable of functioning as a cover rubber to an outermost surface of the laminate A or the laminate B with an ordinary method, it is possible to prepare the laminate of this disclosure. Note that examples of the aforementioned laminate B used in manufacture of the conveyor belt include one obtained by overlapping 2 to 8 laminates A.

Moreover, the method for adhering the stacked present rubber composition layer and reinforcing member layer, and optionally the present rubber composition layer and the rubber layer other than the present rubber composition layer, is not specifically limited. Examples include arranging the stacked rubber composition layer and reinforcing member layer, and optionally the rubber layer other than the present rubber composition layer, in a predetermined mold, and adhering via vulcanization (the so-called vulcanization molding).

The temperature of vulcanization is not specifically limited and may be appropriately selected depending on the purpose, but from the viewpoint of sufficiently adhering the present rubber composition layer and the reinforcing member layer, and simultaneously suppressing overvulcanization, is preferably 130°C to 170°C. Moreover, the vulcanization time is not specifically limited, but is preferably set appropriately so that the present rubber composition layer and the reinforcing member layer are sufficiently adhered, and heat is sufficiently conducted to a center of the laminate so as to perform vulcanization.

The laminate prepared in this way has the present rubber composition layer and the reinforcing member layer, and optionally the present rubber composition layer and the rubber layer other than the present rubber composition layer, firmly adhered to each other, and thus is capable of improving the durability of a rubber product when used as a member of the rubber product, and may be preferably used as a member of rubber products required to have high durability, such as tires for automobiles, conveyor belts, and hoses.

### <Conveyor belt>

The conveyor belt of this disclosure contains the aforementioned laminate of this disclosure. The conveyor belt of this disclosure is not specifically limited as long as it uses the laminate of this disclosure.

As mentioned above, in the conveyor belt of this disclosure, the present rubber composition layer and the reinforcing member, and optionally the present rubber composition layer and the rubber layer other than the present rubber composition layer, are firmly adhered to each other, and thus the conveyor belt of this disclosure has high durability. Moreover, for the same reason, the conveyor belt of this disclosure has high reinforcement performance as well.

### EXAMPLES

The following describes the presently disclosed tire in more detail through examples. However, the presently disclosed tire is not in any way limited by the following examples and suitable alterations may be made that do not change the essence thereof.

### <Preparation of rubber composition>

By using a Banbury mixer, a processing aid, a lubricant, sulfur, a vulcanization accelerator and zinc oxide were added into the formulation as listed in Tables 1 to 3 (unit: parts by mass) at an amount selected according to an ordinary method, to prepare an unvulcanized rubber composition.

By using the prepared unvulcanized rubber composition, evaluation of film thickness stability was performed according to the following procedure.

### (Evaluation of film thickness stability)

An unvulcanized rubber composition in a sheet-like shape with a thickness of 0.7 mm, which was manufactured by using a 6-inch diameter rolling roll (corresponding to the following rubber composition layer mentioned below), was shaped into a shape with a width of 25 cm to 30 cm and a length of 40 cm to 100 cm as a sample. After drawing a square block which is 20 cm on each side centering on a center of this sheet-like sample, each thickness at each apex, midpoints of each side and a central point (9 points in total) of this square block was measured by using a digital thickness gauge ("SMD-550S2-LW", manufactured by Teclock Corporation). Then, differences between maximum values and minimum values of the thickness at the aforementioned 9 points were calculated and evaluated according to the following standard.

Difference between maximum value and minimum value of thickness is less than 0.04 mm ... excellent

Difference between maximum value and minimum value of thickness is 0.04 mm or more and less than 0.07 mm ... good

Difference between maximum value and minimum value of thickness is 0.07 mm or more ... poor

### <Preparation of reinforcing member layer>

A canvas including warp yarns formed of polyethylene terephthalate (number of twist: 16 T/10cm, number of yarn: 83/5cm) and woof yarns formed of nylon (number of twist: 12 T/10cm, number of yarn: 32/5cm) was prepared. On the other hand, by sequentially mixing and stirring resorcinol, formalin, water and an alkaline reaction catalyst, partially performing condensation reaction of resorcinol and formaldehyde, and then mixing and stirring an SBR latex, a vinyl pyridine latex and water, the RFL dispersion was prepared. Then, the entire canvas mentioned above was immersed in the obtained RFL dispersion. The immersed canvas was subjected to drying and heat treatment until a final treatment temperature fell within a range of 210°C to 240°C, and an "undegraded reinforcing member layer" including an RFL film on its surface was obtained. Note that when forming the RFL film in the undegraded reinforcing member layer, the RFL dispersion was adjusted until a latex concentration in terms of the SBR latex and the vinyl pyridine latex in the RFL film in total became 83 mass%.

Further, an undegraded reinforcing member layer the same as the above was prepared, and was left standing for 60 minutes in an ozone tank at 40°C and an ozone concentration of 50 pphm, to obtain a "degraded reinforcing member layer".

### <Preparation of laminate sample>

First, other than the one for use of laminate sample, the aforementioned unvulcanized rubber composition was cut out in a block shape at a weight of 8±1 g, and a 90% vulcanization time (t_{c}(90)) at 155°C of the unvulcanized rubber composition was determined according to JIS K6300-2 and ISO6502 by using a Curelastometer ("CURELASTOMETER7", manufactured by JSR Corporation).

Then, by using the aforementioned unvulcanized rubber composition, a rubber composition layer with a thickness of 0.7 mm was manufactured with a 6-inch diameter rolling roll. Next, by using this rubber composition layer and the aforementioned reinforcing member layer, an unvulcanized laminate sample of a 7-layer structure of [rubber composition layer A-undegraded reinforcing member layer-rubber composition layer B-undegraded reinforcing member layer-rubber composition layer C-undegraded reinforcing member layer-rubber composition layer D] was prepared. This unvulcanized laminate sample was vulcanized in a predetermined mold at 148°C for a time 1.5 times to the t_{c}(90) determined as mentioned above, left along for one night at room temperature, to obtain a vulcanized laminate sample I.

Moreover, with the same method as mentioned below, an unvulcanized laminate sample of a 7-layer structure of [rubber composition layer A-degraded reinforcing member layer-rubber composition layer B-degraded reinforcing member layer-rubber composition layer C-degraded reinforcing member layer-rubber composition layer D] was prepared, to obtain a vulcanized laminate sample II with the same method as mentioned above.

Note that the aforementioned rubber composition layers A to D were prepared from the same type of rubber composition.

By using these laminate samples I, II, the adhesiveness of the rubber composition layers and the reinforcing member layers was evaluated according to the following procedure.

### (Peel test of rubber composition layer and reinforcing member layer)

The aforementioned laminate sample was cut into a width of 25 mm in a warp direction, and then cuts of 10 mm to 20 mm were opened with a knife on a part of the rubber composition layer B. A test peeling was performed from the cut portions by using an "Auto Rubber Universal Testing Machin AC-10kN" manufactured by TSE Corporation. Here, a peel strength in this test (N/25mm) was measured at a peel angle of 90° and a peel speed of 50 mm/min. Then, the adhesiveness and the peel operability of the laminate samples I and II were evaluated according to the following. Tables 1 to 3 list the results of this evaluation.

### -Evaluation of adhesiveness-

Larger than 100 N/25mm ... excellent
100 to 80 N/25mm ... good
Smaller than 80 N/25mm ... poor

### -Evaluation of peel operability-

300 N/25mm or less ... excellent
Larger than 300 N/25mm ... poor

A rubber amount remaining on the reinforcing member layer after this test (rubber attachment amount) was evaluated according to the method described below. Namely, among the two reinforcing member layers adjacent the peeled rubber composition layer B, with respect to a reinforcing member layer which is judged by observing as having a smaller rubber attachment amount, its rubber attachment surface was imaged as a sample photo. Next, the imaged sample photo was subjected to image thresholding into a rubber component and a reinforcing member layer component and area calculation with an image processing software, where the case in which the rubber remained in an area larger than 60% was evaluated as excellent, the case in which the rubber remained in an area of 60% to 40% as good, and the case in which the rubber remained in an area smaller than 40% as poor. Tables 1 to 3 list the results of this evaluation.

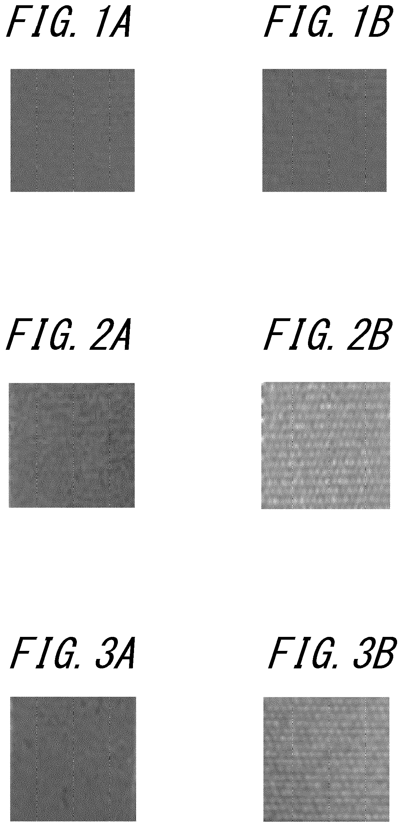

For reference, FIG. 1A illustrates a schematic view of a peeled surface in a test using the laminate sample I of Example 1, and FIG. 1B illustrates a schematic view of a peeled surface in a test using the laminate sample II of Example 1. Similarly, FIG. 2A illustrates a schematic view of a peeled surface in a test using the laminate sample I of Comparative Example 2, and FIG. 2B illustrates a schematic view of a peeled surface in a test using the laminate sample II of Comparative Example 2. Moreover, similarly, FIG. 3A illustrates a schematic view of a peeled surface in a test using the laminate sample I of Comparative Example 6, and FIG. 3B illustrates a schematic view of a peeled surface in a test using the laminate sample II of Comparative Example 6. Here, a darker color of the peeled surface indicates that more rubber composition remained, and indicates excellent adhesiveness without occurrence of interfacial peeling between the rubber composition layer and the reinforcing member layer.

**[Table 1]**

| | | Comparative example | Comparative example | Example | Example | Example | Example | Example | Example | Example | Comparative example | Comparative example |
|---|---|---|---|---|---|---|---|---|---|---|---|---|
| | | 1 | 2 | 1 | 2 | 3 | 4 | 5 | 6 | 7 | 3 | 4 |
| Natural rubber | | 35 | 35 | 35 | 35 | 35 | 35 | 35 | 35 | 35 | 35 | 35 |
| Styrene-butadiene rubber | | 60 | 60 | 60 | 60 | 60 | 60 | 60 | 60 | 60 | 60 | 60 |
| Reclaimed rubber *1 | Isoprene rubber | 5 | 5 | 5 | 5 | 5 | 5 | 5 | 5 | 5 | 5 | 5 |
| | Carbon black | 2.5 | 2.5 | 2.5 | 2.5 | 2.5 | 2.5 | 2.5 | 2.5 | 2.5 | 2.5 | 2.5 |
| | Others | 2.5 | 2.5 | 2.5 | 2.5 | 2.5 | 2.5 | 2.5 | 2.5 | 2.5 | 2.5 | 2.5 |
| Calcium carbonate 1 *2 | | 82 | 82 | 82 | 82 | 82 | 82 | 82 | 82 | 82 | 0 | 5 |
| Calcium carbonate 2 *3 | | 0 | 0 | 0 | 0 | 0 | 0 | 0 | 0 | 0 | 0 | 0 |
| Calcium carbonate 3 *4 | | 0 | 0 | 0 | 0 | 0 | 0 | 0 | 0 | 0 | 0 | 0 |
| Calcium carbonate 4 *5 | | 0 | 0 | 0 | 0 | 0 | 0 | 0 | 0 | 0 | 0 | 0 |
| Carbon black 1 *6 | | 44 | 43 | 41 | 39 | 37 | 35 | 34 | 31 | 27 | 37 | 37 |
| Carbon black 2 *7 | | 0 | 0 | 0 | 0 | 0 | 0 | 0 | 0 | 0 | 0 | 0 |
| Carbon black 3 *8 | | 0 | 0 | 0 | 0 | 0 | 0 | 0 | 0 | 0 | 0 | 0 |
| Wet silica 1 *9 | | 0 | 1 | 3 | 5 | 7 | 9 | 10 | 13 | 17 | 7 | 7 |
| Wet silica 2 *10 | | 0 | 0 | 0 | 0 | 0 | 0 | 0 | 0 | 0 | 0 | 0 |
| Wet silica 3 *11 | | 0 | 0 | 0 | 0 | 0 | 0 | 0 | 0 | 0 | 0 | 0 |
| Wet silica 4 *12 | | 0 | 0 | 0 | 0 | 0 | 0 | 0 | 0 | 0 | 0 | 0 |
| Wet silica 5 *13 | | 0 | 0 | 0 | 0 | 0 | 0 | 0 | 0 | 0 | 0 | 0 |
| Dry silica 1 *14 | | 0 | 0 | 0 | 0 | 0 | 0 | 0 | 0 | 0 | 0 | 0 |
| Evaluation of film thickness stability | | Good | Good | Good | Good | Good | Good | Good | Good | Good | Poor | Poor |
| Peel test of rubber composition layer and undegraded reinforcing member laver | Peel strength (N/25mm) | 150 | 152 | 153 | 153 | 155 | 159 | 162 | 167 | 171 | 355 | 323 |
| | Evaluation of adhesiveness | Excellent | Excellent | Excellent | Excellent | Excellent | Excellent | Excellent | Excellent | Excellent | Excellent | Excellent |
| | Evaluation of peel operability | Excellent | Excellent | Excellent | Excellent | Excellent | Excellent | Excellent | Excellent | Excellent | Poor | Poor |
| | Evaluation of rubber attachment amount | Excellent | Excellent | Excellent | Excellent | Excellent | Excellent | Excellent | Excellent | Excellent | Excellent | Excellent |
| Peel test of rubber composition layer and degraded reinforcing member laver | Peel strength (N/25mm) | 71 | 75 | 112 | 130 | 149 | 150 | 151 | 155 | 156 | 351 | 340 |
| | Evaluation of adhesiveness | Poor | Poor | Excellent | Excellent | Excellent | Excellent | Excellent | Excellent | Excellent | Excellent | Excellent |
| | Evaluation of peel operability | Excellent | Excellent | Excellent | Excellent | Excellent | Excellent | Excellent | Excellent | Excellent | Poor | Poor |
| | Evaluation of rubber attachment amount | Poor | Poor | Excellent | Excellent | Excellent | Excellent | Excellent | Excellent | Excellent | Excellent | Excellent |

**[Table 2]**

| | | Example | Example | Example | Example | Comparative example | Example | Example | Example | Example | Example | Example |
|---|---|---|---|---|---|---|---|---|---|---|---|---|
| | | 8 | 9 | 10 | 11 | 5 | 12 | 13 | 14 | 15 | 16 | 17 |
| Natural rubber | | 35 | 35 | 35 | 35 | 35 | 35 | 35 | 35 | 35 | 35 | 35 |
| Styrene-butadiene rubber | | 60 | 60 | 60 | 60 | 60 | 60 | 60 | 65 | 65 | 65 | 65 |
| Reclaimed rubber *1 | Isoprene rubber | 5 | 5 | 5 | 5 | 5 | 5 | 5 | 0 | 0 | 0 | 0 |
| | Carbon black | 2.5 | 2.5 | 2.5 | 2.5 | 2.5 | 2.5 | 2.5 | 0 | 0 | 0 | 0 |
| | Others | 2.5 | 2.5 | 2.5 | 2.5 | 2.5 | 2.5 | 2.5 | 0 | 0 | 0 | 0 |
| Calcium carbonate 1 *2 | | 10 | 20 | 40 | 120 | 140 | 82 | 82 | 82 | 82 | 82 | 10 |
| Calcium carbonate 2 *3 | | 0 | 0 | 0 | 0 | 0 | 0 | 0 | 0 | 0 | 0 | 0 |
| Calcium carbonate 3 *4 | | 0 | 0 | 0 | 0 | 0 | 0 | 0 | 0 | 0 | 0 | 0 |
| Calcium carbonate 4 *5 | | 0 | 0 | 0 | 0 | 0 | 0 | 0 | 0 | 0 | 0 | 0 |
| Carbon black 1 *6 | | 37 | 37 | 37 | 37 | 37 | 37 | 37 | 41 | 39 | 35 | 37 |
| Carbon black 2 *7 | | 0 | 0 | 0 | 0 | 0 | 0 | 0 | 0 | 0 | 0 | 0 |
| Carbon black 3 *8 | | 0 | 0 | 0 | 0 | 0 | 0 | 0 | 0 | 0 | 0 | 0 |
| Wet silica 1 *9 | | 7 | 7 | 7 | 7 | 7 | 0 | 0 | 3 | 5 | 9 | 7 |
| Wet silica 2 *10 | | 0 | 0 | 0 | 0 | 0 | 7 | 0 | 0 | 0 | 0 | 0 |
| Wet silica 3 *11 | | 0 | 0 | 0 | 0 | 0 | 0 | 7 | 0 | 0 | 0 | 0 |
| Wet silica 4 *12 | | 0 | 0 | 0 | 0 | 0 | 0 | 0 | 0 | 0 | 0 | 0 |
| Wet silica 5 *13 | | 0 | 0 | 0 | 0 | 0 | 0 | 0 | 0 | 0 | 0 | 0 |
| Dry silica 1 *14 | | 0 | 0 | 0 | 0 | 0 | 0 | 0 | 0 | 0 | 0 | 0 |
| Evaluation of film thickness Evaluation of film thickness stability | | Good | Good | Good | Excellent | Excellent | Good | Good | Good | Good | Good | Good |
| Peel test of rubber composition layer and undegraded reinforcing member layer | Peel strength (N/25mm) | 290 | 245 | 176 | 109 | 88 | 156 | 151 | 160 | 163 | 164 | 288 |
| | Evaluation of adhesiveness | Excellent | Excellent | Excellent | Excellent | Good | Excellent | Excellent | Excellent | Excellent | Excellent | Excellent |
| | Evaluation of peel operability | Excellent | Excellent | Excellent | Excellent | Excellent | Excellent | Excellent | Excellent | Excellent | Excellent | Excellent |
| | Evaluation of rubber attachment amount | Excellent | Excellent | Excellent | Excellent | Excellent | Excellent | Excellent | Excellent | Excellent | Excellent | Excellent |
| Peel test of rubber composition layer and degraded reinforcing member layer | Peel strength (N/25mm) | 289 | 240 | 176 | 103 | 75 | 125 | 95 | 117 | 133 | 140 | 275 |
| | Evaluation of adhesiveness | Excellent | Excellent | Excellent | Excellent | Poor | Excellent | Good | Excellent | Excellent | Excellent | Excellent |
| | Evaluation of peel operability | Excellent | Excellent | Excellent | Excellent | Excellent | Excellent | Excellent | Excellent | Excellent | Excellent | Excellent |
| | Evaluation of rubber attachment amount | Excellent | Excellent | Excellent | Excellent | Good | Good | Good | Excellent | Excellent | Excellent | Excellent |

**[Table 3]**

| | | Example | Comparative example | Comparative example | Example | Comparative example | Example | Example | Example | Example | Example | Example |
|---|---|---|---|---|---|---|---|---|---|---|---|---|
| | | 18 | 6 | 7 | 19 | 8 | 20 | 21 | 22 | 23 | 24 | 25 |
| Natural rubber | | 35 | 35 | 35 | 35 | 35 | 35 | 35 | 35 | 35 | 35 | 35 |
| Styrene-butadiene rubber | | 65 | 60 | 60 | 60 | 60 | 60 | 60 | 60 | 60 | 60 | 60 |
| Reclaimed rubber *1 | Isoprene rubber | 0 | 5 | 5 | 5 | 5 | 5 | 5 | 5 | 5 | 5 | 5 |
| | Carbon black | 0 | 2.5 | 2.5 | 2.5 | 2.5 | 2.5 | 2.5 | 2.5 | 2.5 | 2.5 | 2.5 |
| | Others | 0 | 2.5 | 2.5 | 2.5 | 2.5 | 2.5 | 2.5 | 2.5 | 2.5 | 2.5 | 2.5 |
| Calcium carbonate 1 *2 | | 120 | 82 | 20 | 20 | 20 | 20 | 0 | 0 | 0 | 82 | 82 |
| Calcium carbonate 2 *3 | | 0 | 0 | 0 | 0 | 0 | 0 | 82 | 0 | 0 | 0 | 0 |
| Calcium carbonate 3 *4 | | 0 | 0 | 0 | 0 | 0 | 0 | 0 | 82 | 0 | 0 | 0 |
| Calcium carbonate 4 *5 | | 0 | 0 | 0 | 0 | 0 | 0 | 0 | 0 | 82 | 0 | 0 |
| Carbon black 1 *6 | | 37 | 37 | 0 | 0 | 0 | 0 | 39 | 39 | 39 | 37 | 37 |
| Carbon black 2 *7 | | 0 | 0 | 44 | 37 | 0 | 0 | 0 | 0 | 0 | 0 | 0 |
| Carbon black 3 *8 | | 0 | 0 | 0 | 0 | 44 | 37 | 0 | 0 | 0 | 0 | 0 |
| Wet silica 1 *9 | | 7 | 0 | 0 | 7 | 0 | 7 | 5 | 5 | 5 | 0 | 0 |
| Wet silica 2 *10 | | 0 | 0 | 0 | 0 | 0 | 0 | 0 | 0 | 0 | 0 | 0 |
| Wet silica 3 *11 | | 0 | 0 | 0 | 0 | 0 | 0 | 0 | 0 | 0 | 0 | 0 |
| Wet silica 4 *12 | | 0 | 0 | 0 | 0 | 0 | 0 | 0 | 0 | 0 | 7 | 0 |
| Wet silica 5 *13 | | 0 | 0 | 0 | 0 | 0 | 0 | 0 | 0 | 0 | 0 | 7 |
| Dry silica 1 *14 | | 0 | 7 | 0 | 0 | 0 | 0 | 0 | 0 | 0 | 0 | 0 |
| Evaluation of film thickness Evaluation of film thickness stability | | Excellent | Good | Good | Good | Poor | Good | Good | Poor | Excellent | Good | Good |
| Peel test of rubber composition layer and undegraded reinforcing member layer | Peel strength (N/25mm) | 117 | 155 | 245 | 266 | 310 | 290 | 140 | 177 | 154 | 153 | 150 |
| | Evaluation of adhesiveness | Excellent | Excellent | Excellent | Excellent | Excellent | Excellent | Excellent | Excellent | Excellent | Excellent | Excellent |
| | Evaluation of peel operability | Excellent | Excellent | Excellent | Excellent | Poor | Excellent | Excellent | Excellent | Excellent | Excellent | Excellent |
| | Evaluation of rubber attachment amount | Excellent | Excellent | Excellent | Excellent | Excellent | Excellent | Good | Good | Excellent | Good | Good |
| Peel test of rubber composition layer and degraded reinforcing member layer | Peel strength (N/25mm) | 109 | 79 | 78 | 167 | 75 | 180 | 133 | 139 | 128 | 130 | 128 |
| | Evaluation of adhesiveness | Excellent | Poor | Poor | Excellent | Poor | Excellent | Excellent | Excellent | Excellent | Excellent | Excellent |
| | Evaluation of peel operability | Excellent | Excellent | Excellent | Excellent | Excellent | Excellent | Excellent | Excellent | Excellent | Excellent | Excellent |
| | Evaluation of rubber attachment amount | Excellent | Poor | Poor | Excellent | Poor | Excellent | Good | Good | Excellent | Good | Good |

| | | | | | | | | | | | | |
|---|---|---|---|---|---|---|---|---|---|---|---|---|
| (Examples 21 and 22 are comparative examples) *1 Reclaimed rubber ... 50 mass% of isoprene rubber, 25 mass% of carbon black, 25 mass% of others (other than rubber component, carbon black, wet silica, calcium carbonate, and dry silica) *2 Calcium carbonate 1 ... "NS#100", manufactured by Nitto Funka Kogyo K.K., average primary particle size: 2.1 µm *3 Calcium carbonate 2 ... "NS#200", manufactured by Nitto Funka Kogyo K.K., average primary particle size: 14.8 µm *4 Calcium carbonate 3 ... "SOFTON 3200", manufactured by Shiraishi Calcium Kaisha, Ltd., average primary particle size: 0.7 µm *5 Calcium carbonate 4 ... "NS#500", manufactured by Nitto Funka Kogyo K.K., average primary particle size: 4.4 µm *6 Carbon black 1 ... "SEAST V", manufactured by Tokai Carbon Co., Ltd. *7 Carbon black 2 ... "SHO-BLACK N330", manufactured by Cabot Japan K.K. *8 Carbon black 3 ... "SEAST 6", manufactured by Tokai Carbon Co., Ltd. *9 Wet silica 1 ... "Nipsil AQ", manufactured by Tosoh Silica Corporation, nitrogen adsorption BET specific surface area: 205 m²/g, average primary particle size: 16 nm *10 Wet silica 2 ... "Nipsil SS-50F", manufactured by Tosoh Silica Corporation, nitrogen adsorption BET specific surface area: 82 m²/g *11 Wet silica 3 ... "Nipsil SS-70", manufactured by Tosoh Silica Corporation, nitrogen adsorption BET specific surface area: 42 m²/g *12 Wet silica 4 ... "ULTRASIL VN3", manufactured by Evonic Degussa Corporation, nitrogen adsorption BET specific surface area: 175 m²/g *13 Wet silica 5 ... "Nipsil NA", manufactured by Tosoh Silica Corporation, nitrogen adsorption BET specific surface area: 135 m²/g *14 Dry silica 1 ... "AEROSIL 130", manufactured by Nippon Aerosil Co., Ltd., nitrogen adsorption BET specific surface area: 130 m²/g | | | | | | | | | | | | |

According to Tables 1 to 3, the rubber composition of this disclosure, which is obtainable by compounding a rubber component containing a diene based rubber, a wet silica, a carbon black, and calcium carbonate, where the compounding amount of the wet silica is 3 parts by mass or more per 100 parts by mass of the diene based rubber, and the compounding amount of the calcium carbonate is 10 parts by mass or more and 120 parts by mass or less per 100 parts by mass of the diene based rubber, brought a peel strength of 80 N/25mm or more, and had a larger amount of rubber remaining on the reinforcing member layer, in both the peel test of the layer containing this rubber composition and the undegraded reinforcing member layer and the peel test of the layer containing this rubber composition and the degraded reinforcing member layer. Therefore, it is understood that the rubber composition of this disclosure has excellent adhesiveness with undegraded reinforcing members and excellent adhesiveness with reinforcing members in environmental degradation. This fact is clarified as well from the darker color of the peeled surfaces in both FIG. 1A and FIG. 1B (on the other hand, the peeled surfaces in FIG. 2B and FIG. 3B appear lighter). Moreover, according to Tables 1 to 3, it is understood that in the aforementioned peel test, the aforementioned rubber composition of this disclosure has a peel strength of 300 N/25mm or less, and thus has high peel operability with undegraded reinforcing members and reinforcing members in environmental degradation.

### INDUSTRIAL APPLICABILITY

According to this disclosure, it is possible to provide a rubber composition having excellent adhesiveness with reinforcing members, particularly reinforcing members in environmental degradation, and capable of bringing high peeling operability therewith. Moreover, according to this disclosure, it is possible to provide a laminate using the aforementioned rubber composition and capable of improving durability of a rubber product, and a conveyor belt using the aforementioned laminate and having high durability.

## Claims

1. A rubber composition obtainable by compounding a rubber component containing a diene based rubber, a wet silica, a carbon black and a calcium carbonate, wherein:
the compounding amount of the wet silica is 3 parts by mass or more per 100 parts by mass of the diene based rubber;
the compounding amount of the calcium carbonate is 10 parts by mass or more and 120 parts by mass or less per 100 parts by mass of the diene based rubber;
the diene based rubber comprises a natural rubber and a styrene-butadiene rubber; and
the average primary particle size of the calcium carbonate is 0.8 µm or more and 13 µm or less.

2. The rubber composition according to claim 1, wherein:
the compounding amount of the wet silica is 4 parts by mass or more and 9 parts by mass or less per 100 parts by mass of the diene based rubber.

3. The rubber composition according to claim 1 or claim 2, wherein:
the ratio of the compounding amount of the natural rubber to the total compounding amount of the natural rubber and the styrene-butadiene rubber is 20 mass% or more and 60 mass% or less.

4. The rubber composition according to any one of claims 1 to 3, wherein:
the nitrogen adsorption BET specific surface area of the wet silica is 80 m²/g or more.

5. The rubber composition according to any one of claims 1 to 4, wherein:
the nitrogen adsorption BET specific surface area of the wet silica is more than 200 m²/g.

6. The rubber composition according to any one of claims 1 to 5, wherein:
the nitrogen adsorption BET specific surface area of the carbon black is 8 m²/g or more and 100 m²/g or less.

7. Use of a rubber composition according to any one of claims 1 to 6, for being arranged between a rubber member and a reinforcing member, or between reinforcing members, to adhere the same.

8. A laminate obtainable by stacking and adhering a layer containing the rubber composition according to any one of claims 1 to 6 and a reinforcing member layer.

9. A conveyor belt comprising the laminate according to claim 8.

## Patentansprüche

1. Kautschukzusammensetzung, die durch Compoundieren einer Kautschukkomponente erhältlich ist, die einen Kautschuk auf Dienbasis, ein nasses Siliciumdioxid, einen Ruß und ein Calciumcarbonat enthält, wobei:
die Compoundiermenge des nassen Siliciumdioxids 3 Masseteile oder mehr pro 100 Masseteile des Kautschuks auf Dienbasis beträgt;
die Coumpondiermenge des Calciumcarbonats 10 Masseteile oder mehr und 120 Masseteile oder weniger pro 100 Masseteile des Kautschuks auf Dienbasis beträgt;
der Kautschuk auf Dienbasis einen Naturkautschuk und einen Styrol-Butadienkautschuk umfasst; und
die durchschnittliche primäre Teilchengröße des Calciumcarbonats 0,8 µm oder mehr und 13 µm oder weniger beträgt.

2. Kautschukzusammensetzung nach Anspruch 1, wobei:
die Compoundiermenge des nassen Siliciumdioxids 4 Masseteile oder mehr und 9 Masseteile oder weniger pro 100 Masseteile des Kautschuks auf Dienbasis beträgt.

3. Kautschukzusammensetzung nach Anspruch 1 oder Anspruch 2, wobei
das Verhältnis der Compoundiermenge des Naturkautschuks zu der gesamten Compoundiermenge des Naturkautschuks und des Styrol-Butadienkautschuks 20 Masse-% oder mehr und 60 Masse-% oder weniger beträgt.

4. Kautschukzusammensetzung nach einem der Ansprüche 1 bis 3, wobei:
der BET-spezifische Stickstoffadsorptionsoberflächenbereich des nassen Siliciumdioxids 80 m²/g oder mehr beträgt.

5. Kautschukzusammensetzung nach einem der Ansprüche 1 bis 4, wobei:
der BET-spezifische Stickstoffabsorptionsoberflächenbereich des nassen Siliciumdioxids mehr als 200 m²/g beträgt.

6. Kautschukzusammensetzung nach einem der Ansprüche 1 bis 5, wobei:
der BET-spezifische Stickstoffabsorptionsoberflächenbereich des Rußes 8 m²/g oder mehr und 100 m²/g oder weniger beträgt.

7. Verwendung einer Kautschukzusammensetzung nach einem der Ansprüche 1 bis 6, um zwischen einem Kautschukelement und einem Verstärkungselement oder zwischen Verstärkungselementen angeordnet zu sein, um dieselben aneinander zu haften.

8. Laminat, das durch Stapeln und Anhaften einer Schicht erhältlich ist, die die Kautschukzusammensetzung nach einem der Ansprüche 1 bis 6 und eine Verstärkungselementschicht enthält.

9. Förderband, umfassend das Laminat nach Anspruch 8.

## Revendications

1. Composition de caoutchouc pouvant être obtenue par malaxage d'un constituant de caoutchouc contenant un caoutchouc à base de diène, une silice humide, un noir de carbone et un carbonate de calcium:
la quantité de malaxage de la silice humide étant de 3 parties en masse ou plus pour 100 parties en masse du caoutchouc à base de diène;
la quantité de malaxage du carbonate de calcium étant de 10 parties en masse ou plus et de 120 parties en masse ou moins pour 100 parties en masse du caoutchouc à base de diène;
le caoutchouc à base de diène comprenant un caoutchouc naturel et un caoutchouc de styrène-butadiène; et
la taille moyenne des particules primaires du carbonate de calcium étant de 0,8 µm ou plus et de 13 µm ou moins.

2. Composition de caoutchouc selon la revendication 1,
la quantité de malaxage de la silice humide étant de 4 parties en masse ou plus et de 9 parties en masse ou moins pour 100 parties en masse du caoutchouc à base de diène.

3. Composition de caoutchouc selon la revendication 1 ou la revendication 2,
le rapport de la quantité de malaxage du caoutchouc naturel à la quantité totale de malaxage du caoutchouc naturel et du caoutchouc de styrène-butadiène étant de 20 % en masse ou plus et de 60 % en masse ou moins.

4. Composition de caoutchouc selon l'une quelconque des revendications 1 à 3,
la surface spécifique B.E.T. d'adsorption d'azote de la silice humide étant de 80 m²/g ou plus.

5. Composition de caoutchouc selon l'une quelconque des revendications 1 à 4,
la surface spécifique B.E.T. d'adsorption d'azote de la silice humide étant supérieure à 200 m²/g.

6. Composition de caoutchouc selon l'une quelconque des revendications 1 à 5,
la surface spécifique B.E.T. d'adsorption d'azote du noir de carbone étant de 8 m²/g ou plus et de 100 m²/g ou moins.

7. Utilisation d'une composition de caoutchouc selon l'une quelconque des revendications 1 à 6, à disposer entre un élément de caoutchouc et un élément de renfort, ou entre des éléments de renfort, pour les faire adhérer.

8. Stratifié pouvant être obtenu par empilement et adhésion d'une couche contenant la composition de caoutchouc selon l'une quelconque des revendications 1 à 6 et une couche d'élément de renfort.

9. Bande transporteuse comprenant le stratifié selon la revendication 8.
